# EUROPÄISCHE PATENTSCHRIFT

(11) **EP 0 991 464 B1**
(45) Veröffentlichungstag und Bekanntmachung des Hinweises auf die Patenterteilung: **09.01.2002**
(21) Anmeldenummer: 98922574.3
(22) Anmeldetag: 11.06.1998
(51) Int. Cl.: B01J 19/00, F16L 39/02, B01L 3/00, F28F 9/26, B01L 9/06, B01L 7/00

(54) **REAKTIONSGEFÄSSHALTEVORRICHTUNG**
REACTION VESSEL HOLDER
DISPOSITIF DE RETENUE D'EPROUVETTES

(30) Priorität: 16.06.1997 CH 146797; 08.11.1997 CH 257797
(43) Veröffentlichungstag der Anmeldung: 12.04.2000
(73) Patentinhaber: Chemspeed Ltd., 4302 Augst (CH)
(72) Erfinder: GÜLLER, Rolf, CH-5027 Herznach (CH); MUNCH, Séraphin, F-68170 Rixheim (FR); GEES, Thomas, CH-7416 Almens (CH); TSCHIRKY, Hansjörg, CH-4107 Ettingen (CH)
(74) Vertreter: Bollhalder, Renato
(86) Internationale Anmeldenummer: CH9800254
(87) Internationale Veröffentlichungsnummer: WO9857739

(56) Entgegenhaltungen:
- WO-A-93/17785
- WO-A-93/24233
- WO-A-97/09353
- US-A- 5 503 805
- PATENT ABSTRACTS OF JAPAN vol. 18, no. 537 (C-1260), 13. Oktober 1994 -& JP 06 190264 A (SHIMADZU CORP.), 12. Juli 1994 -& DATABASE WPI Section Ch, Week 9432 Derwent Publications Ltd., London, GB; Class A89, AN 94-259687 XP002055457 & JP 06 190264 (SHIMADZU CORP.) , 12. Juli 1994

## Beschreibung

Die vorliegende Erfindung bezieht sich auf eine Reaktionsgefässhaltevorrichtung, wie sie im Oberbegriff des unabhängigen Patentanspruches 1 definiert ist, sowie einen Reaktionsblock mit einer derartigen Reaktionsgefässhaltevorrichtung.

In der chemischen Forschung der Pharmaindustrie und der Universitäten wird es immer wichtiger, möglichst schnell eine grosse Anzahl von potentiellen Wirkstoffen ausfindig zu machen und diese dann zu testen. Ein Teil der chemischen Forschung bezieht sich daher heutzutage auf kombinatorische Chemie, parallele Synthese und Hochgeschwindigkeitschemie. Von zentraler Bedeutung ist hierbei die Möglichkeit, bekannte oder neue chemische Reaktionstypen mit möglichst geringen Anpassungen möglichst breit einsetzen zu können.

Es wurden daher verschiedenartigste Vorrichtungen zur parallelen Durchführung einer Vielzahl von chemischen, biochemischen oder physikalischen Verfahren geschaffen, die aber alle entweder nur für spezielle Anwendungen geeignet, zu kompliziert aufgebaut, zu gross oder zu bedienungsunfreundlich sind und/oder mit Hilfe derer die einzelnen Verfahrensschritte nicht genügend automatisiert werden können.

Von der Firma Advanced Chemtech, Europe SA wird unter der Bezeichnung 496 MBS eine derartige Vorrichtung vertrieben, die einen Reaktionsblock umfasst, in welchen eine Vielzahl von Vertiefungen eingelassen sind, worin die Reaktionen durchgeführt werden können. Der ganze Block wird durch eine darunter angebrachte Vibrationsvorrichtung bewegt, was zu einer nicht sehr effizienten Durchmischung der Reaktanden in den Vertiefungen führt. Mittels hohler Nadeln können in die Vertiefungen Flüssigkeiten zugeführt und/oder entnommen werden, wobei eine Abdichtung der einzelnen Vertiefungen gegen aussen mittels Septen/Septenplatten realisiert ist.

Diese Vorrichtung weist weiter den Nachteil auf, dass zum Schütteln der Reaktionsblock mit dem ganzen Gewicht bewegt werden muss. Dies ist mit ein Grund, weshalb nur mit kleinen Amplituden geschüttelt (resp. vibriert) wird. Ein Schütteln während der Flüssigkeitszuführung oder -entnahme, was oft notwendig oder sogar unabdingbar ist, ist aus technischen Gründen (Nadel würde z.B. durch das Septum mitbewegt) nicht möglich. Zudem ist ein Arbeiten mit einem Gas nur sehr beschränkt möglich (Septen). Das Arbeiten unter Vakuum wäre theoretisch nur sehr eingeschränkt möglich. Die Septen verlieren spätestens nach jedem Einstechen durch die üblicherweise verwendeten Nadeln an Dichtigkeit. Weiter kondensiert z.B. ein Teil des abgedampften Mediums an den kalten Septen, was einerseits eine Kontamination der Reaktionsmischung durch z.B. Weichmacher im Kunststoff des Septums wahrscheinlich macht (dies gilt auch für alle anderen Anwendungen von Septen in der hier beschriebenen chemischen oder biologischen Reaktionsführung). Darüber hinaus wird aber, vor allem zusammen mit dem oben genannten Dichtigkeitsargument, ein Abdampfen von hochsiedenden Lösungsmitteln, wie z.B. Dimethylformamid oder Dimethylsulfoxid, in einer relativ kurzen Zeit und/oder bei relativ tiefen Temperaturen in sehr vielen Anwendungen gefordert (z.B. wegen der meistens beschränkten Stabilität von chemischen Verbindungen in chemischen oder biologischen Verfahren). Die Reaktionsgefässe können nicht automatisch vollständig geöffnet und geschlossen werden.

Aus der US-A-5 503 805 ist eine Reaktionsgefässhaltevorrichtung bekannt, die einen Fixteil und eine Vielzahl daran uber flexible Schläuche befestigte Reaktionsgefässe aufweist. Die Zuführung von Flüssigkeit in die Reaktionsgefässe erfolgt aus einem Ausgangsgefäss über einen weiteren Schlauch, ein Mehrfachventil und die erwähnten flexiblen Schläuche oder sonst von unten her. Ein Nachteil dieser Vorrichtung besteht darin, dass den Reaktionsgefässen kein Pulver zugeführt werden kann, nicht so genau dosiert werden kann und die Zuführung von verschiedenen Flüssigkeiten in verschiedene Reaktionsgefässe relativ kompliziert ist, da die Zuführung jeweils über das Ausgangsgefäss oder sonst von unten her erfolgt.

Angesichts der Nachteile der bisher bekannten, oben beschriebenen Vorrichtungen liegt der Erfindung die folgende Aufgabe zugrunde. Zu schaffen ist eine Reaktionsgefässhaltevorrichtung der eingangs erwähnten Art, die ein Bewegen von daran befestigten Reaktionsgefässen ermöglicht, ohne dass sich diese Bewegung auf den Fixteil überträgt, und die eine Zuführung von Flüssigkeit, Feststoffen und Gas in die Reaktionsgefässe sowie eine Entnahme aus den Reaktionsgefässen auf einfache Weise ermöglicht.

Diese Aufgabe wird durch die erfindungsgemässe Reaktionsgefässhaltevorrichtung gelöst, wie sie im unabhängigen Patentanspruch 1 definiert ist. Ein erfindungsgemässer Reaktionsblock mit einer derartigen Reaktionsgefässhaltevorrichtung ist in Patentanspruch 12 definiert. Bevorzugte Ausführungsvarianten ergeben sich aus den abhängigen Patentansprüchen.

Das Wesen der Erfindung besteht darin, dass bei einer Reaktionsgefässhaltevorrichtung mit einem Fixteil und einer Mehrzahl daran befestigter Kupplungen, an die Reaktionsgefässe befestigbar sind, wobei mindestens ein Teil jeder Kupplung flexibel ist, mindestens eine der Kupplungen und der Fixteil eine Öffnung aufweisen, durch die ein Zuführ- und/oder Entnahmewerkzeug in ein an der Kupplung befestigtes Reaktionsgefäss einführbar ist.

Dadurch, dass die Reaktionsgefässe mittels beweglicher, mit Vorteil abnehmbarer Kupplungen am Fixteil, der beispielsweise als Schaltblock oder sonstiger Block mit oder ohne eingeklemmten, eingeschraubten oder eingelegten Septen ausgebildet sein kann, befestigt sind, können sie geschüttelt werden, ohne dass sich der betreffende Fixteil mitbewegt. Durch eine zusätzliche axiale Flexibilität der flexiblen Kupplungen können sogar mindestens zwei starr miteinander verbundene Reaktionsgefässe geschüttelt werden. Ausserdem liegt nicht das ganze Gewicht der Reaktionsgefässe inkl. Inhalt auf der Schütteleinrichtung auf, so dass relativ schwache Schütteleinrichtungen ausreichen, die trotz relativ grosser Schüttelamplituden verhältnismässig geringe Vibrationen erzeugen, was den Einsatz von vibrationsempfindlichen Peripheriegeräten, wie z.B. Sampler, Roboter oder andere Automationseinrichtungen. zur Zuführung und/oder Entnahme von Flüssigkeiten und/oder Feststoffen überhaupt erst ermöglicht. Zudem sind solche relativ schwachen Schütteleinrichtungen kostengünstiger und die Reaktionsgefässe können mit einer relativ grossen Amplitude bei sehr hohen Frequenzen geschüttelt werden.

Ein wesentlicher und entscheidender Vorteil liegt darin, dass auch während des Schütteins problemlos mit einem Zuführ- und/oder Entnahmewerkzeug, wie z.B. hohle Nadel, Greifer oder Löffel, eine Flüssigkeit, ein Gas oder ein Feststoff einem Reaktionsgefäss zugegeben und/oder entnommen werden kann, was bei den bisher bekannten Vorrichtungen nicht der Fall ist, aber vor allem für chemische Reaktionen häufig gefordert ist.

Derartige Kupplungen weisen vorteilhafterweise zwischen einem reaktionsgefässseitigen starren Befestigungsteil und einem fixteilseitigen Teil einen Faltbalg auf. Alternativen zum Faltbalg sind z.B. ein flexibles Rohr, ein Kugelgelenk oder ein zwei- oder mehrachsiges Gelenk.

Den Reaktionsgefässen sind vorzugsweise durch den Fixteil hindurch Flüssigkeiten, Gase und/oder Feststoffe zuführ- und/oder entnehmbar. Wenn der Fixteil als Schaltblock ausgebildet ist, umfasst er vorteilhafterweise eine Gaskanalplatte, einen Gaskanal und mit Vorteil eine benachbarte Funktionsplatte, wobei vorteilhafterweise eine dieser Platten bezüglich der anderen verschiebbar angeordnet ist. Die Gaskanalplatte bzw. -platten und die Funktionsplatte bzw. -platten weisen durchgehende Löcher, durchgehende Schlitze und/oder Vertiefungen und/oder durchgehende horizontale Höhlen auf, die jeweils bei mindestens einer Plattenstellung einander so gegenüberliegen, dass
a) zumindest einem Reaktionsgefäss über den bzw. mindestens einen Gaskanal Gase und/oder Flüssigkeiten zuführ- oder entnehmbar sind bzw.
b) zumindest einem Reaktionsgefäss sowohl durch die bzw. mindestens eine Gaskanalplatte als auch durch die bzw. mindestens eine Funktionsplatte hindurch Gase, Flüssigkeiten und/oder Feststoffe zuführ- oder entnehmbar sind.

Mit diesem Schaltblock können je nach Plattenstellung allen oder einzelnen Reaktionsgefässen über den oder die Gaskanäle Flüssigkeiten oder Gase zugeführt oder entnommen und/oder ein Vakuum oder ein Überdruck in den Reaktionsgefässen erzeugt und/oder durch einander gegenüberliegende durchgehende Löcher oder durchgehende Schlitze mit Löchern und/oder Vertiefungen mit Löchern und/oder durchgehende Höhlen mit Löchern in der oder den Gaskanalplatten und in der oder den Funktionsplatten den Reaktionsgefässen mit oder ohne Druckausgleich Gase, Flüssigkeiten und/oder Feststoffe zugeführt oder entnommen werden. Der Verschluss der Reaktionsgefässe erfolgt durch die bzw. mindestens eine Funktionsplatte in bestimmten Plattenstellungen, so dass Septen nicht unbedingt notwendig sind. Auf den Einsatz eines Septums kann daher verzichtet werden, oder es kann allenfalls so angeordnet werden, dass es nur in bestimmten Plattenstellungen als Verschluss für die Reaktionsgefässe dient.

Falls die flexiblen Kupplungen statt an einem Schaltblock an einem einfachen Block als Fixteil angebracht sind, bestehen die gleichen, oben beschriebenen Vorteile, mit Ausnahme jener, welche spezifisch der Funktionsplatte zugeordnet sind.

Dank der flexiblen Kupplungen und der oder den Funktionsplatten können verschiedene Verfahrensschritte durchgeführt werden, ohne dass der betreffende Schaltblock deplaziert oder umgebaut werden muss. Die Funktionsplatte bzw. -platten ermöglichen auch eine kompakte Konstruktion der Schaltblöcke.

Zur Bedienung der Schaltblöcke oder Blöcke mit oder ohne eingeklemmten, eingeschraubten oder eingelegten Septen und der Reaktionsgefässe können ein kommerziell erhältlicher Sampler kombiniert mit einem Dilutor, z.B. der Gilson ASPEC XL der Firma Gilson, Frankreich, oder ein anderer Roboter bzw. eine andere Automationseinheit eingesetzt werden, die eventuell an die erfindungsgemässen Schaltblöcke oder Blöcke mit oder ohne eingeklemmten, eingeschraubten oder eingelegten Septen und Reaktionsgefässe angepasst werden. Die flexiblen Kupplungen können wie oben erwähnt mit allen oben beschriebenen Vorteilen aber auch an einen einfacheren, mit weniger oder gar keiner Schaltung versehenen Block angebracht werden. So ist z.B. die hier beschriebene Zudosierung während des Schüttelns ebenfalls möglich und zwar sowohl wenn Septen eingesetzt werden, als auch wenn die Reaktionsgefässe offen liegen. Ein Druckausgleich ist z.B. über die Nadel (kommerziell erhältlich) bei Zugabe von Flüssigkeiten gewährleistet oder durch ein zentrales Rohr mit einer permanenten oder z.B. über ein Ventil zuschaltbaren Verbindung zu einer z.B. Argonquelle und z.B. permanenten Verbindungen des zentralen Gaskanals zu den durchgehenden Löchern, also zu den Reaktionsgefässen.

Für gewisse Anwendungen ist vorzugsweise zwischen mindestens einem der. Reaktionsgefässe und dem Fixteil ein abnehmbarer Rückflusskühler angeordnet, der ein Kühlrohr aufweist, das so weit in das Reaktionsgefäss hineinreicht, dass im Reaktionsgefäss im Verbindungsbereich von Reaktionsgefäss und Rückflusskühler oder unterhalb davon gekühlt werden kann. Mit Vorteil ist dabei das Kühlrohr nur in der einen Hälfte des Öffnungsquerschnitts des Reaktionsgefässes angeordnet, damit das Zugabe- oder Entnahme-Instrument zentriert tief in das Reaktionsgefäss eintauchen kann.

Auf diese Weise kann unter gleichzeitiger Rückflusskühlung z.B. mit einem Zuführwerkzeug oder über den bzw. einen Gaskanal dem Reaktionsgefäss eine Flüssigkeit zugeführt, ein Schutzgas, gasförmiger Reaktand, gasförmiger Katalysator oder ein Feststoff zugegeben und/oder entnommen und/oder ein Druckausgleich erreicht werden und/oder die Reaktionsgefässe mit hoher Frequenz geschüttelt werden. Alle diese Eingriffe in das Reaktionsgefäss erfolgen durch die selbe Öffnung, was dazu beiträgt, dass die erfindungsgemässe Vorrichtung relativ kompakt und kostengünstig gebaut werden kann und wartungs- und bedienungsfreundlich ist.

Für weitere Anwendungen sind spezielle Reaktionsgefässe notwendig, welche eine Temperierung des Reaktionsgefässes, resp. dessen Inhalts in einem möglichst breiten Temperaturbereich ermöglichen. Die dafür entwickelten Reaktionsgefässe weisen vorteilhafterweise eine fixe oder abnehmbar am unteren Ende des Reaktionsgefässes montierte zweite Kammer auf, durch welche ein Temperiermedium gepumpt werden kann. Geräte zur Förderung von temperierten Medien sind auf dem Markt erhältlich. Z.B. kann ein in einem sehr weiten Temperaturbereich einsetzbarer Unistat der Firma Huber GmbH verwendet werden. Dieses Gerät, zusammen mit einem speziellen Medium (z.B. Polydimethylsiloxan, Nr. 85413 der Firma Fluka AG) ermöglicht eine Temperierung des Reaktionsgefässes im Bereich von ca. -80°C bis ca. +200°C. Damit diese Reaktionsgefässe im oben beschriebenen Sinne (also unter Anwendung der flexiblen Kupplungen, also z.B. unter gleichzeitigem Zudosieren eines Stoffes) geschüttelt werden können, ist es entscheidend, dass die zweite, fix mit dem Reaktionsgefäss verbundene Kammer flexibel mit dem Temperiergerät und/oder mit den weiteren, z.B. parallel geführten Reaktionsgefässen und/oder einer anderen medienfördernden Einheit direkt oder indirekt verbunden ist. Ein Beispiel für eine indirekte Verbindung zweier Reaktionsgefässe ist in Fig. 26 dargestellt. Dabei ist eine zweite Kammer. des einen Reaktionsgefässes über eine spiralförmige, medienführende Leitung mit einer zweiten Kammer eines anderen Reaktionsgefässes verbunden. Am einfachsten werden zur Verbindung der Temperierkammern untereinander und mit dem Temperiergerät flexible Schläuche aus Kunststoff eingesetzt. Da Kunststoffe vor allem bei Anwendungen, welche einen sehr grossen Temperaturbereich (-80 bis +300°C) erfordern, entweder zu wenig flexibel (vor allem bei tiefen Temperaturen) sind und/oder vor allem bei hohen Temperaturen zu instabil sind, werden vorteilhafterweise vor allem für dichte Packungen von Reaktionsgefässen mit somit geringen Distanzen zwischen den Temperierkammern speziell entwickelte, speziell angeordnete spiralförmige Kupplungen aus hohlen Metalldrähten (z.B. Aluminium, Kupfer, Stahl, Federstahl) oder Teflonschläuchen (geeignet sind die meisten handelsüblichen fluorierten Kohlenwasserstoffpolymere) als Verbindungen zwischen den Temperierkammern und dem Temperiergerät eingesetzt. Als Alternative zu diesem System wurden flexible Kammern mit Anschlussstutzen für die Reaktionsgefässe speziell entwickelt. Diese Kammern sind z.B. aus Silikon verschiedener Härte, thermoplastischen Elastomeren, wie z.B. Polyethylen oder Polypropylen, Copolymeren aus z.B. Styrol, Ethylen oder Butylen mit Silikonöl, angereichert hergestellt. Diese flexiblen Kammern erfüllen die gleichen Bedingungen wie die untereinander oder mit dem Temperiergerät mittels medienführender Leitungen flexibel verbundenen, oben beschriebenen Kammern aus einem steifen Material. Die Flexibilität wird hier statt über Schläuche aus einem flexiblen Material bzw. über die federnden Spiralen aus einem steiferen Material über das flexible Material, aus welchem die Kammern hergestellt sind, erreicht. Im Prinzip entsprechen die Kammern einer "Bettflasche", in welche die Reaktionsgefässe vorteilhafterweise so eingelassen sind, dass diese mit dem Wärmeträger direkt in Kontakt stehen und nach aussen hin abgedichtet sind, so dass der Wärmeträger im Kreislauf verbleibt.

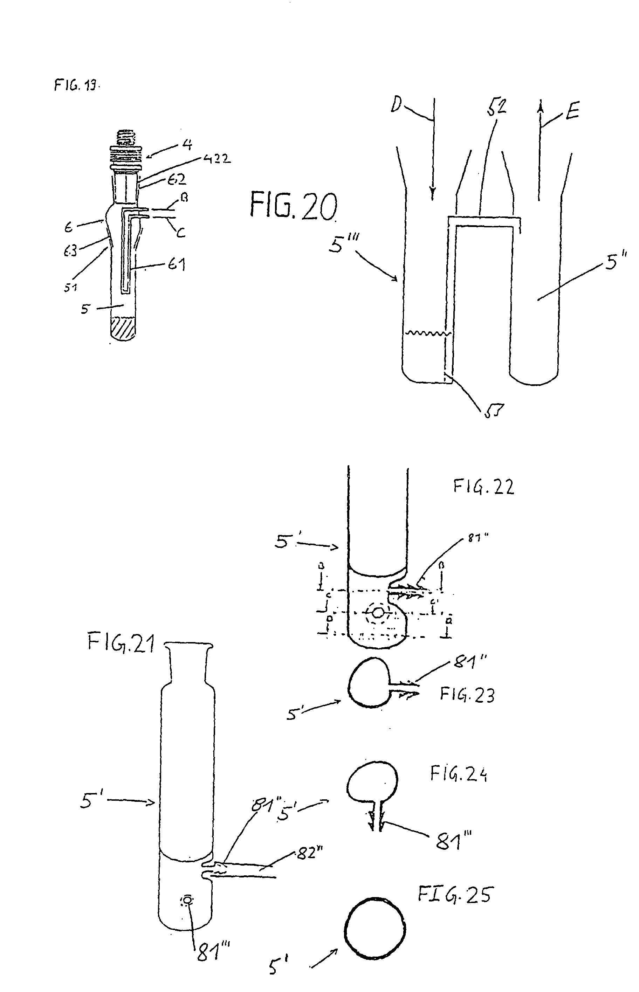

Für weitere Anwendungen sind Reaktionsgefässe nützlich und oft notwendig, welche es erlauben, z.B. ein Gemisch aus einem unlöslichen und einem löslichen Stoff durch Filtration zu trennen. Dies geschieht vorteilhafterweise mit der erfindungsgemässen Anordnung derart, dass das Filtrat zur weiteren Verarbeitung ohne ein manuelles Eingreifen in ein zweites Reaktionsgefäss transferiert wird, so dass es für eine weitere Verarbeitung (z.B. Abdestillieren des Lösungsmittels) auf der gleichen Zugriffsebene z.B. des eingesetzten Samplers zur weiteren Verarbeitung zur Verfügung steht. Die gleichen Vorteile ergeben sich für den im Reaktionsgefäss vor der Fritte befindlichen Filterkuchen. Dies wird mit den in Fig. 20 beschriebenen Reaktionsgefässen zusammen mit einer speziellen Funktion im Fixteil oder mit analogen Ventilsteuerungen so erreicht, dass das Reaktionsgefäss, welches die Fritte beinhaltet, vakuumdicht verschlossen wird und gleichzeitig das Reaktionsgefäss, welches das Filtrat auffängt, unter Vakuum gesetzt wird. Das Gleiche kann mittels Druck statt Vakuum erreicht werden, so dass - allgemeiner ausgedrückt - ein relativer Überdruck im Reaktionsgefäss mit der Fritte erzeugt werden muss. Der oben beschriebene Schaltblock ermöglicht diese notwendige Druckdifferenz automatisch, gesteuert über einen PC, indem die verschiebbare Platte die entsprechende asymetrische Position einnimmt. Alle angeschlossenen Zwillingsfiltrationsgefässe resp. die darin befindlichen Gemische werden dann parallel filtriert.

Für alle oben erwähnten Reaktionsgefässe für die genannten speziellen und weitere Anwendungen sind auch alle möglichen Kombinationen einsetzbar. So können z.B. die Rückflusskühler auf die Zwillingsfiltrationsgefässe, welche ihrerseits mit den oben beschriebenen zweiten Kammern zur Temperierung des Inhalts der Reaktionsgefässe versehen sind, aufgesetzt werden. Eine oder mehrere dieser Kombinationen können dann z.B. an einen Schaltblock oder einfachen Block mit fix oder abnehmbar angebrachten flexiblen Kupplungen aufgesetzt werden. Mit Ausführungsbeispielen von flexiblen Kupplungen, welche auch axial flexibel sind, können auch je zwei starr miteinander verbundene Reaktionsgefässe mit den beschriebenen Vorteilen geschüttelt werden, also z.B. unter gleichzeitiger Zugabe eines Stoffes mittels einer Zugabevorrichtung.

Die erfindungsgemässe Reaktionsgefässhaltevorrichtung und der erfindungsgemässe Reaktionsblock werden nun unter Bezugnahme auf die beigefügten Zeichnungen detaillierter beschrieben. Es zeigen:
- Fig. 1: eine Perspektivansicht von schräg oben eines Ausführungsbeispiels einer Vorrichtung zur parallelen Durchführung einer Vielzahl von chemischen, biochemischen, biologischen oder physikalischen Verfahren;
- Fig. 2: eine Perspektivansicht von schräg unten eines Ausführungsbeispiels einer Vorrichtung zur parallelen Durchführung einer Vielzahl von chemischen, biochemischen, biologischen oder physikalischen Verfahren mit einer eingezeichneten flexiblen Kupplung;
- Fig. 3: eine Seitenansicht einer Kupplung;
- Fig. 4: einen Schnitt durch die Kupplung von Fig. 3 gemäss der Linie A-A;
- Fig. 5: einen einfachen Block mit einem Gaskanal mit weggelassener Septenplatte und weggelassener Deckplatte, so dass die Verbindungen der Reaktionsgefässe über Vertiefungen im Block und die Verbindungen zum Gaskanal sichtbar sind, mit zwei Ausführungsbeispielen von flexiblen Kupplungen;

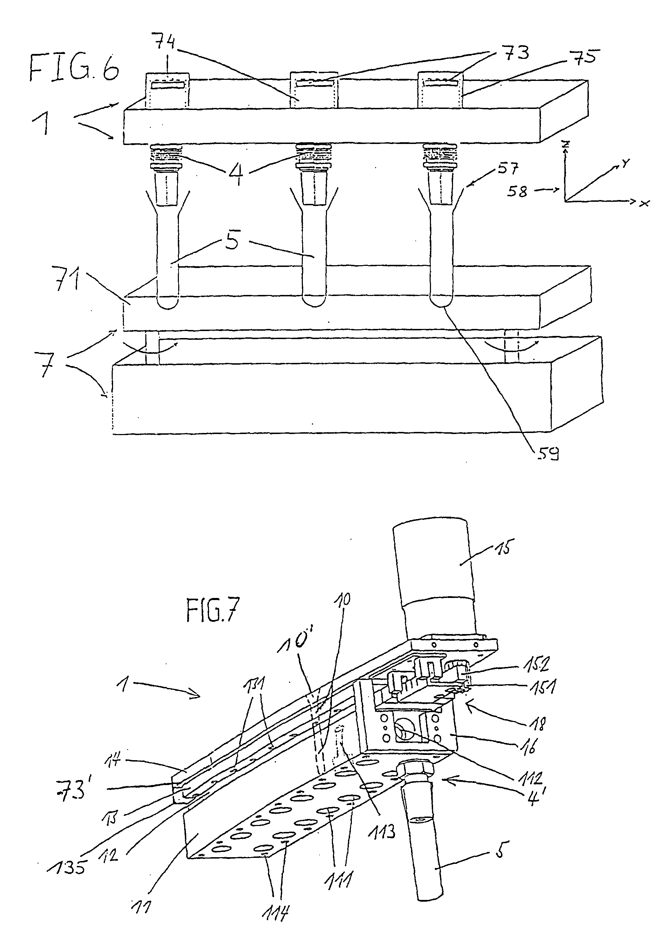

- Fig. 6: eine Perspektivansicht eines Ausführungsbeispiels eines einfachen Blocks mit aufgeschraubten individuellen Septen und zwei Reihen zu je drei Reaktionsgefässen mit angedeuteter Schüttelvorrichtung und Verbindung der Reaktionsgefässe mit derselben;
- Fig. 7: einen Schaltblock mit einem Ausführungsbeispiel einer flexiblen Kupplung und einem Ausführungsbeispiel eines daran angebrachten Reaktionsgefässes;
- Fig. 8: den Schaltblock von Fig. 7 mit zwei verschiedenen Ausführungsbeispielen einer flexiblen Kupplung in seine Einzelteile zerlegt;
- Fig. 9: ein Ausführungsbeispiel der Unterseite der Funktionsplatte des Schaltblocks von Fig. 7;
- Fig. 10: ein Ausführungsbeispiel der Oberseite der Funktionsplatte des Schaltblocks von Fig. 7;
- Fig. 11: ein Segment einer Ausführungsvariante einer Schieberplatte des Schaltblocks von Fig. 7, wobei die notwendigen Verbindungen der Reaktionsgefässe mit dem Gaskanal der Gaskanalplatte als durchgehende Höhlen ausgeführt sind;
- Fig. 12 bis 15: Schnitte durch das Segment von Fig. 11, die den Aufbau der durchgehenden Höhlen zeigen;
- Fig. 16: eine Perspektivansicht der Gaskanalplatte des Schaltblocks von Fig. 7;
- Fig. 17: eine Seitenansicht der Gaskanalplatte des Schaltblocks von Fig. 7, wobei nicht sichtbare Teile gestrichelt dargestellt sind;
- Fig. 18: eine Draufsicht auf die Gaskanalplatte des Schaltblocks von Fig. 7, wobei nicht sichtbare Teile gestrichelt dargestellt sind;
- Fig. 19: eine flexible Kupplung mit einem daran befestigten einfachen Reaktionsgefäss und einem Ausführungsbeispiel eines Rückflusskühlers;
- Fig. 20: ein Ausführungsbeispiel von zwei flexibel oder starr mit einem Rohr verbundenen Reaktionsgefässen mit einer Fritte in einem der beiden Reaktionsgefässe, um eine Filtration z.B. eines Gemisches in das zweite Reaktionsgefäss, welches auf dem gleichen Niveau steht, zu erlauben;
- Fig. 21, 22: ein Ausführungsbeispiel eines Reaktionsgefässes mit einer zweiten angebrachten Kammer, mit Anschlüssen für eine Zu- und eine Abführleitung, um eine serielle oder parallele Verbindung der parallel angeordneten Reaktionsgefässe untereinander resp. mit einer Temperiereinheit zu ermöglichen, um eine Temperierung der Reaktionsmischung zu erlauben;
- Fig. 23: einen Schnitt durch das Reaktionsgefäss von Fig. 22entlang der Linie B-B;

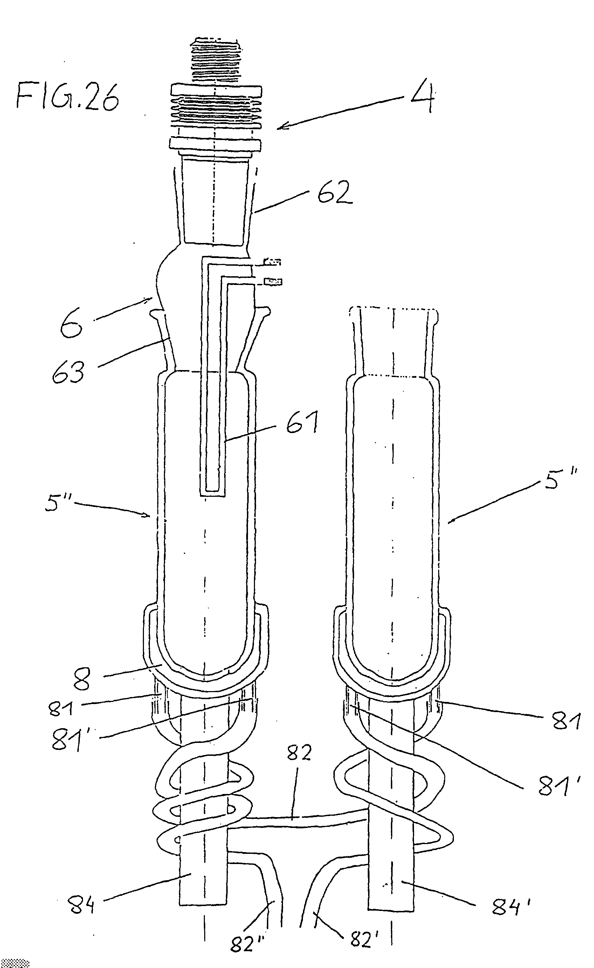

- Fig. 24: einen Schnitt durch das Reaktionsgefäss von Fig. 22 entlang der Linie C-C;
- Fig. 25: einen Schnitt durch das Reaktionsgefäss von Fig. 22 entlang der Linie D-D;
- Fig. 23: ein Ausführungsbeispiel von zwei unterhalb des flexiblen Teils der Kupplung auf engstem Raum flexibel miteinander verbundenen Reaktionsgefässen;

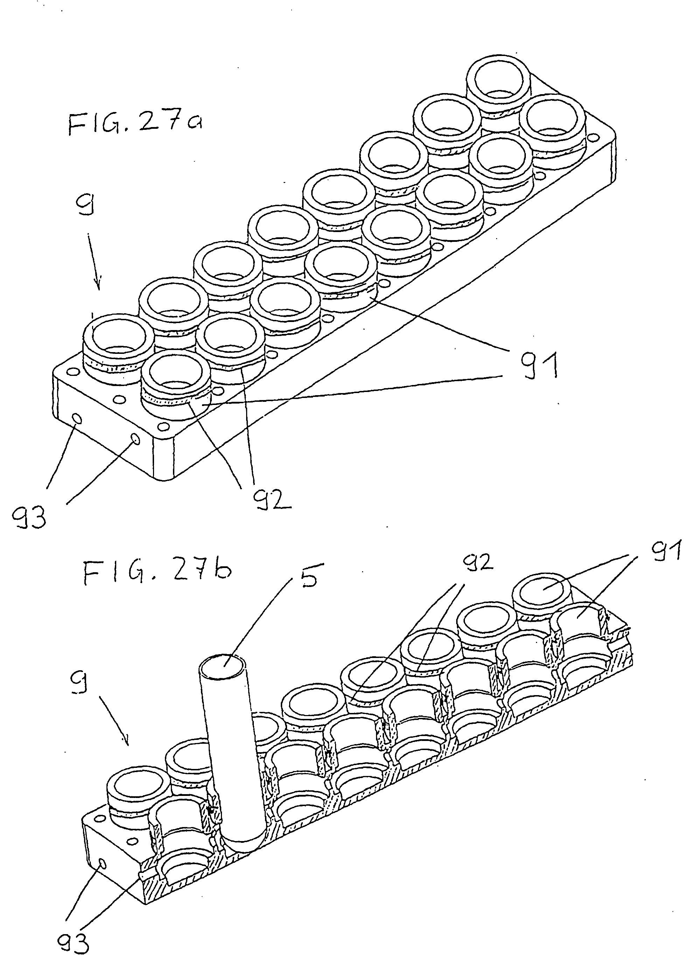

- Fig. 27a: eine flexible Kammer aus einem in einem grossen Temperaturbereich stabilen und flexiblen Material, in welche die Reaktionsgefässe eintauchen, so dass diese mit einem unteren Teil mit dem Temperiermedium direkt in Kontakt sind und ein Austritt von Temperiermedium aus der Kammer durch Dichtungslippen verhindert wird;
- Fig.27b: einen Schnitt durch die flexible Kammer von Fig. 27a;

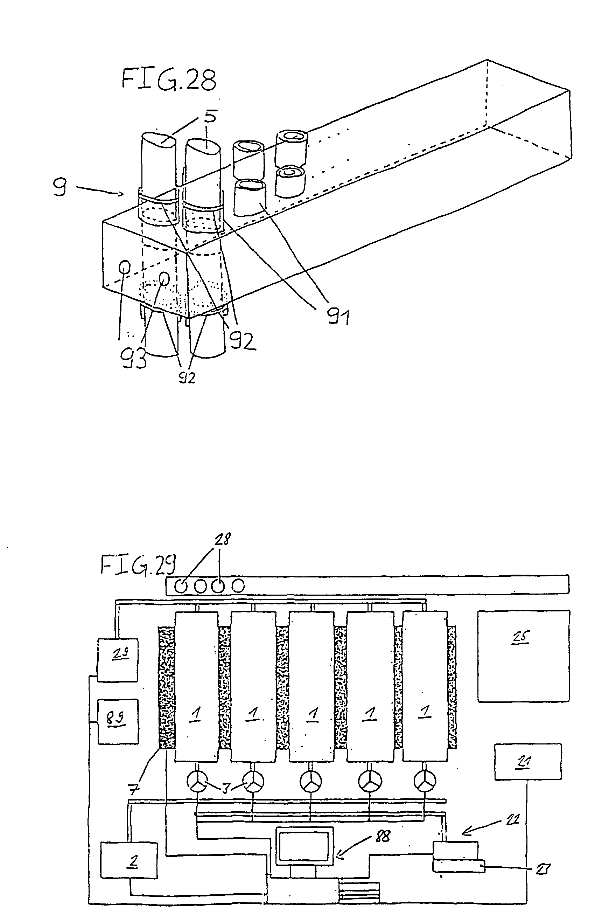

- Fig. 28: eine flexible Kammer gemäss Fig. 27a, die einen mittleren Teil der Reaktionsgefässe umfasst; und
- Fig. 29: ein schematisches Schaltbild einer erfindungsgemässen Vorrichtung zur parallelen Durchführung einer Vielzahl von chemischen, biochemischen, biologischen oder physikalischen Verfahren.

### Figur 1

Das dargestellte Ausführungsbeispiel einer Vorrichtung zur parallelen Durchführung einer Vielzahl von chemischen, biochemischen, biologischen oder physikalischen Verfahren umfasst ein Trägergestell 24, in das zwei Schaltblöcke 1 eingesetzt sind, zwischen denen noch Platz für drei weitere Schaltblöcke 1 ist. Die Befestigung der Schaltblöcke 1 erfolgt mittels Schrauben, wofür das Trägergestell 24 Schraubenlöcher 241 aufweist. Am Trägergestell 24 ist ausserdem ein Eduktgefässgestell 25 angeordnet, das zur Aufbewahrung von Eduktfläschchen 250 dient. Dieses ist derart ausgeführt, dass die Eduktfläschchen 250 auf zwei Ebenen angeordnet werden können. Dies dient der besseren Ausnutzung des zur Verfügung stehenden Platzes und somit der Erhöhung der Anzahl Eduktfläschchen 250. Zum Halten von zusätzlichen Eduktfläschchen 250 oder Probeentnahmefläschchen sind zwei Halterungsblöcke oder Auffangplatten 27 vorgesehen. Lösungsmittelzapfstellen 28 ermöglichen eine Entnahme von Lösungsmitteln aus Lösungsmitteltanks.

Ein Arm 26 eines Samplers dient zum Tragen einer hohlen Nadel für das Handling von Ausgangsstoffen oder Produkten. Die Eckpunkte der zugriffsfläche der hohlen Nadel 261 sind mit Nadeln 261 markiert.

Ebenfalls zur Vorrichtung gehören, weiter unten in Figur 29 dargestellt, eine Schütteleinrichtung 7, eine Vakuumpumpe 2, mehrere Gaszuführeinrichtungen, Ventile für die Gaszuführeinrichtungen bzw. die Vakuumpumpe, Temperiereinheiten, mehrere Steuereinheiten, ein Dilutor sowie eine Vielzahl von Reaktionsgefässen 5.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

### Figur 2

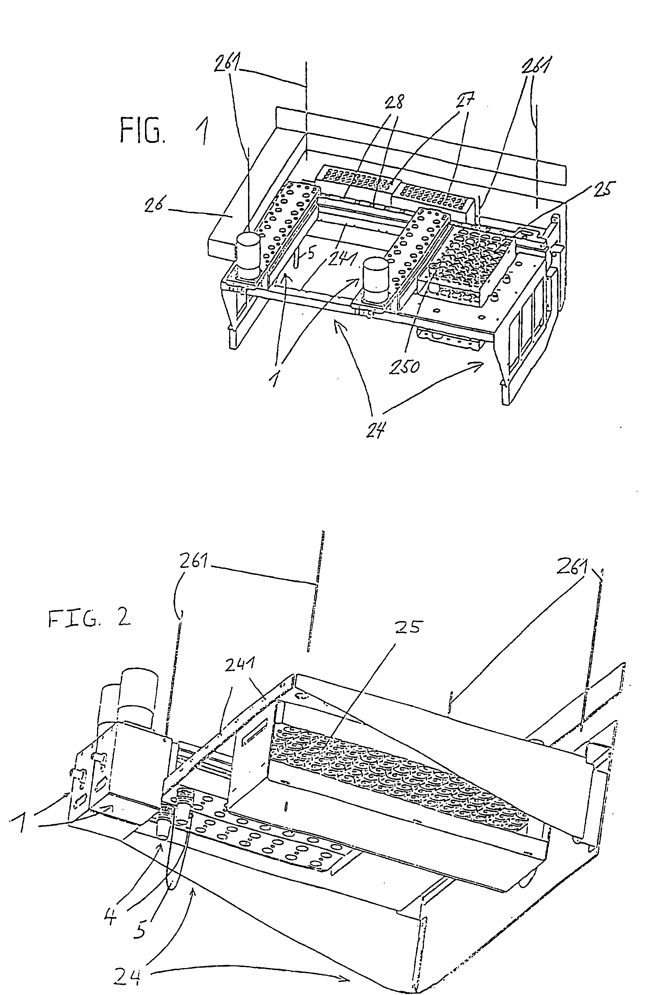

Eine Ausführungsvariante zur Vorrichtung zur parallelen Durchführung einer Vielzahl von chemischen, biochemischen, biologischen oder physikalischen Verfahren von Fig. 1 weist zwei flexible Kupplungen 4 und ein anderes Gestell 25 zur Aufbewahrung von Edukten auf.

### Figuren 3 und 4

Die gezeigte Kupplung 4 umfasst einen blockseitigen Teil 41 und einen reaktionsgefässseitigen Teil 42, zwischen denen ein Faltenbalg 43 angeordnet ist, welcher die Funktion erfüllt, dass der reaktionsgefässeitige Teil 42 gegenüber dem blockseitigen Teil 41 beweglich ist, und zwar sowohl lateral als auch in x-, y- und z-Richtung. Der blockseitige Teil 41 ist mit einem Gewinde 411 versehen, sc dass die Kupplung 4 in ein mit einem Innengewinde versehenes Loch 111, welches in Figur 16 dargetellt ist, des Schaltblockes geschraubt werden kann. Der reaktionsgefässeitige Teil 42 umfasst zudem einen Fixierbereich 421 für das Anbringen von Befestigungsklammern und einen Normschliff 422 zur lösbaren Befestigung eines Reaktionsgefässes 5 oder anderer benutzter Teile, wie z.B. Rückflusskühler 6. Die Kupplung 4 weist eine zentrale Öffnung 433 auf.

### Figur 5

Ein einfacher Block 1' umfast eine Gaskanalplatte 11' und zwei Ausführungsbeispiele von flexiblen Kupplungen 4, 4' - eine mit einem flexiblen Balg 43, die andere mit einem flexiblen Rohr 43' - als flexibles Teil der Kupplung. Am flexiblen Teil ist jeweils ein starrer Befestigungsteil 42 bzw. 42' zur Befestigung eines Reaktionsgefässes 5 angebracht.

Die weiter unten genauer beschriebene Kupplung 4 wird in die Unterseite des gezeigten Blockes durch ein Gewinde 411 in ein Innengewinde des Blockes eingeschraubt. Die entgegengesetzte Seite dient zum abnehmbaren Befestigen von Reaktionsgefässen 5. Zudem können die Reaktionsgefässe mit einer hier nicht sichtbaren Septenplatte verschlossen werden.

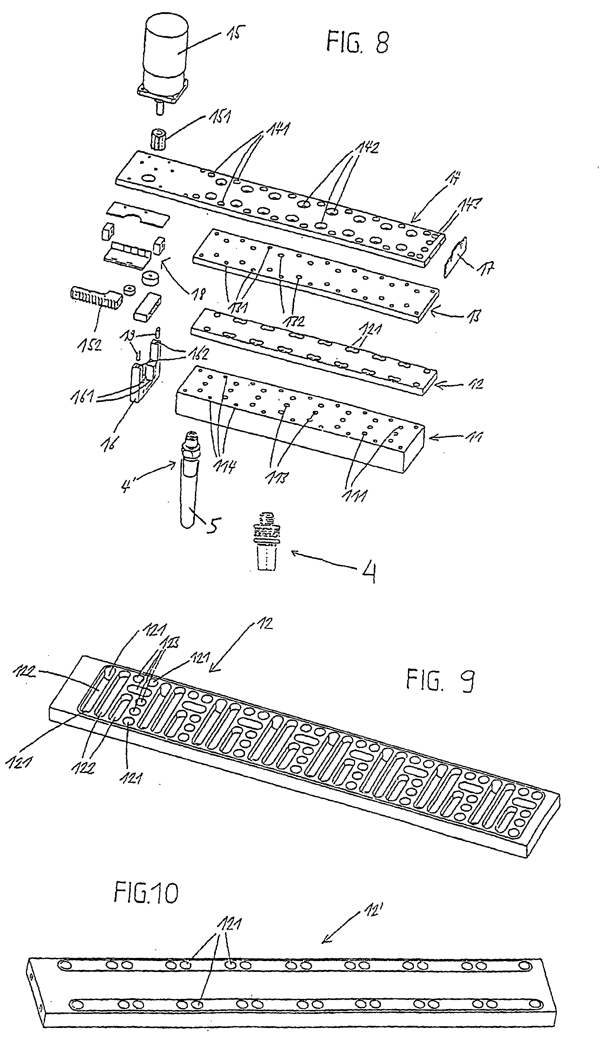

Die Kupplung 4 kann beispielsweise aüs den Materialien, die weiter unten im Zusammenhang mit Fig. 7 beschrieben sind, bestehen.

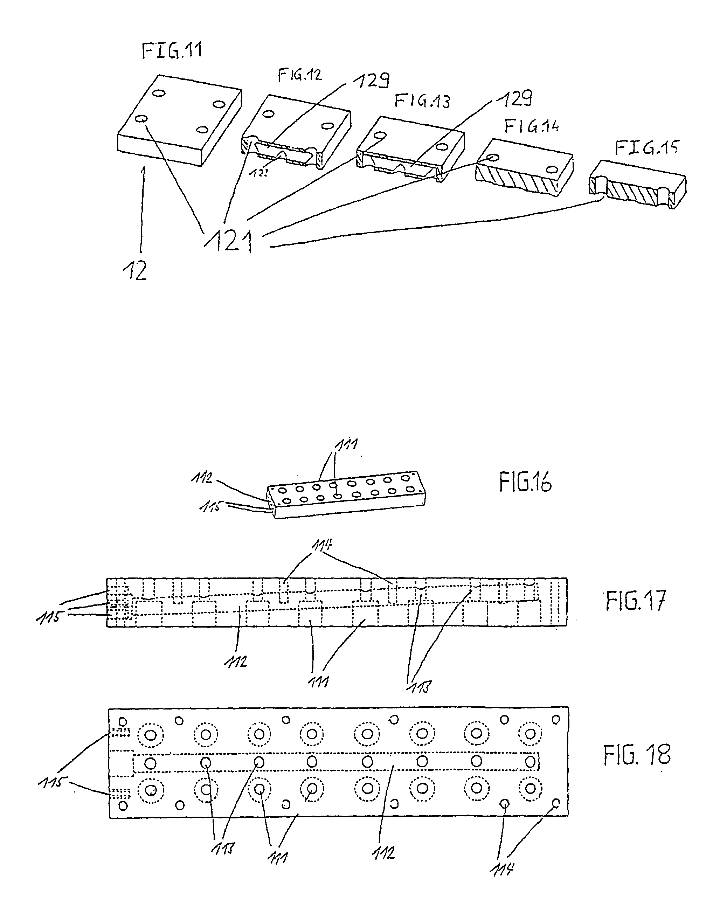

Mit 113 sind Gaskanallöcher, mit 114 durchgehende Löcher, mit 161 Schraubenlöcher, mit 162 ein Bolzenloch und mit 119 Vertiefungen bezeichnet (s. auch Fig. 8 und 16-18).

### Figur 6

Ein Schnitt durch ein Ausführungsbeispiel eines Blocks 1 mit einer Reihe zu drei Reaktionsgefässen, welche am Block 1 mit je einem Septum 73 (Fixierung durch Kunststoffschraubenhütchen 74) fest verschlossen sind. Die Reaktionsgefässe 5 sind jeweils mit einer flexiblen Kupplung 4 mit dem Schaltblock 1 verbunden. Die Reaktionsgefässe 5 werden durch einen Mitnehmer 71 geführt, welcher fix mit dem schematisch gezeichneten Schüttler 7 verbunden ist. Die Schüttelbewegung erfolgt in Pfeilrichtung. Das Koordinatenkreuz 58 deutet an, dass das der Kupplung abgewandte Ende 59 der Reaktionsgefässe und das kupplungsseitige Ende 57 der Reaktionsgefässe in drei Freiheitsgraden beweglich ist.

### Figur 7

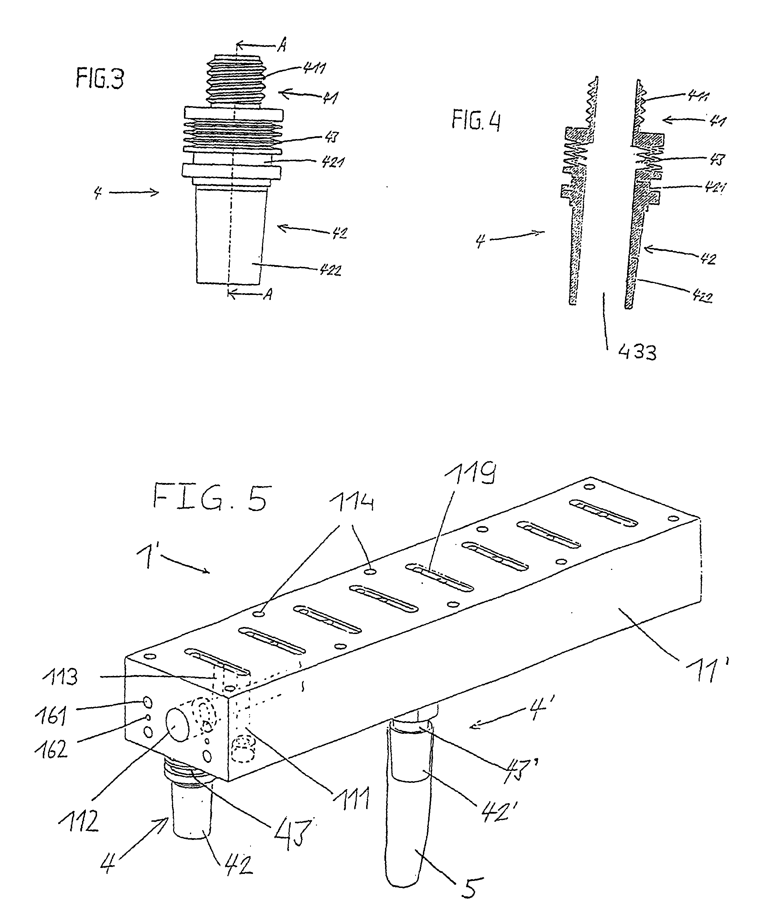

Die in Fig. 5 beschriebenen flexiblen Kupplungen 4, 4' dienen zum abnehmbaren Befestigen von Reaktionsgefässen 5 am Schaltblock 1. Jedem durchgehenden Loch 111 der Gaskanalplatte kann dabei ein Reaktionsgefäss 5 oder mehreren Löchern 75 ein Reaktionsgefäss 5 zugeordnet werden.

Ein in der Vorrichtung von Fig. 1 verwendeter Schaltblock 1 weist eine Gaskanalplatte 11, eine Funktionsplatte 12 in Form einer Schieberplatte, eine Gegenplatte 13 und eine Stützplatte 14 auf, die übereinander liegen. Die Stützplatte 14, die Gegenplatte 13 und die Gaskanalplatte 11 werden durch Schrauben zusammengehalten, die in Schraubenlöchern 10 angeordnet sind. Eine Stirnplatte 16 mit Bolzenlöchern und Schraubenlöchern 161 verbindet diese drei Platten zusätzlich mittels Bolzen und nicht dargestellten Schrauben. Die Funktionsplatte 12 ist verschiebbar zwischen der Gaskanalplatte 11 und der Gegenplatte 13 angeordnet. Sie wird von einem Schrittmotor 15 über ein Ritze 151 und eine Zahnstange 152 angetrieben. Mit der Bezugsziffer 18 sind Befestigungs-, Distanz- und Positionierungselemente bezeichnet.

Die Stützplatte 14 weist noch zwei Reihen durchgehender Löcher 131 auf, welche es einer in Fig. 1 beschriebenen Nadel 261 oder einem sonstigen festen Gegenstand ermöglichen, die Platte zu durchdringen. Diese Platte dient vorwiegend zur Stabilisierung, zum Schutz und zum Halten der Antriebseinrichtung für die Funktionsplatte 12. Eine Platine 135 dient als Sammelstelle für die Lichtschrankensignale. Alternativ zu dieser Anordnung kann eine Standardschnittstelle zur Steuerung der oben aufgeführten Funktionen dienen.

Die Gegenplatte 13 weist Schraubenlöcher 10' und durchgehende Löcher 10 auf, die den Schraubenlöchern 10' und durchgehenden Löchern 10 der Stützplatte 14 gegenüberliegen. Sie besteht. vorzugsweise aus einem hochwertigeren Material und vor allem ihre der Funktionsplatte 12 zugewandte Seite ist exakter beschaffen als die Stützplatte 14.

Die Funktionsplatte 14 ist schmaler als die Gegenplatte 13 und die Gaskanalplatte 11, so dass sie genau zwischen die Verbindungsschrauben dieser beiden Platten passt und von diesen Verbindungsschrauben auch gleich geführt wird. Sie umfasst durchgehende Löcher 10, deren Ränder gegenüber der Plattenoberfläche leicht erhöht sind und so für eine gute Abdichtung sorgen. Auf der Unterseite weist sie zudem noch Vertiefungen auf, die weiter unten näher erläutert werden.

### Figur 8

Die Gaskanalplatte 11 umfasst neben den Schraubenlöchern 114 und den durchgehenden Löchern 10 noch Gaskanallöcher 113, die in einem zentralen Gaskanal 112 enden. An das offene Ende des Gaskanals 112 können über ein Ventil, vorzugsweise Mehrfachventil, eine entsprechende Anzahl Vakuumpumpen und Gaszuführeinrichtungen angeschlossen werden, welche die Reaktionsgefässe 5 über die flexiblen Kupplungen 4' bedienen.

Es besteht auch noch die Möglichkeit, zwischen der Gegenplatte 13 und Stützplatte 14 ein Septum aus einem mit einer Nadel durchdringbarem Material anzuordnen, welches als zusätzliche, fakultative Abdichtung der Reaktionsgefässöffnungen bei einander gegenüberliegenden durchgehenden Löchern der Gegenplatte 13, der Gaskanalplatte 11 und der Funktionsplatte 12 wirkt.

Die einzelnen Teile des Schaltblocks können beispielsweise aus Metall, insbesondere rostfreiem Stahl, Messing oder Titanlegierungen, Glas, insbesondere SiO₂-Glas, Kunststoff, insbesondere Teflon, Polypropylen oder Polyethylen, Naturstein, insbesondere Granit oder Gneis, oder Keramik insbesondere AlO₃ oder MACOR® , bestehen. Die Kupplungen können beispielsweise aus Kunststoff oder einem Metall, insbesondere aus Teflon, Polypropylen, Polyethylen oder Stahlblech bestehen.

### Figur 9

Die Unterseite der Funktionsplatte 12 weist hier ein sich achtmal wiederholendes Muster auf. Ein einzelnes Muster umfasst vier verschiedene Anordnungen von durchgehenden Löchern 121, Vertiefungen 122 und Schliessflächen 123, die je nach Plattenstellung den durchgehenden Löchern 121 und den Gaskanallöchern 113 der Gaskanalplatte 11 und/oder der Stützplatte 13 gegenüberliegen und so vier verschiedene Funktionsplattenfunktionen definieren.

Die erste Anordnung weist zwei durchgehende Löcher 121 und zwischen diesen eine Vertiefung 122 auf. Die erste Funktionsplattenfunktion lässt also beide zugeordneten Reaktionsgefässe 5 vollständig offen, d.h. sowohl für Zuführund/oder Entnahmewerkzeuge als auch gegenüber dem Gaskanal. Bei der zweiten Anordnung ist eine einzige lange Vertiefung 12 vorhanden.

Die dritte Anordnung umfasst eine Vertiefung und zwei Schliessflächen 123. Die dritte Funktionsplattenfunktion schliesst ein zugeordnetes Reaktionsgefäss vollständig ab, während sie das andere zugeordnete Reaktionsgefäss 5 nur gegenüber dem Gaskanal 112 offen lässt, womit eine Druckdifferenz in parallel geschalteten Reihen von Reaktionsgefässen erzeugt werden kann.

Bei der vierten Anordnung sind zwei durchgehende Löcher 121 und zwei Vertiefungen 123 vorhanden. Die vierte Funktionsplattenfunktion lässt die beiden zugeordneten Reaktionsgefässe 5 für Zuführ- und/oder Entnahmewerkzeuge offen, schliesst sie aber gegenüber dem Gaskanal 112 ab.

Die Ränder der durchgehenden Löcher 121, der Vertiefungen 122 und der Schliessflächen 123 sind insgesamt leicht über die Plattenoberfläche erhöht und sorgen so für eine gute Abdichtung, mit der Möglichkeit eines vollständigen Verschlusses der Reaktionsgefässe 5 oder der Möglichkeit, ein Vakuum anzulegen.

Selbstverständlich sind auch andere Anordnungen der durchgehenden Löcher 121, der Vertiefungen 122 und der Schliessflächen 123 und somit andere Funktionsplattenfunktionen oder andere Muster denkbar.

### Figur 10

Diese Funktionsplatte 12' unterscheidet sich von der Funktionsplatte 12 dadurch, dass auf der Oberseite nicht nur gerade die Ränder der durchgehenden Löcher 121 über die Plattenoberfläche erhöht sind, sondern auch die Bereiche. zwischen den durchgehenden Löchern 121.

### Figur 11

Eine alternative Ausführungsvariante der in Fig. 7 beschriebene Funktionsplatte 12, wobei nur ein Segment aus dem sich 8-fach wiederholenden Muster einer vollständigen Funktionsplatt 12 dargestellt ist. Die in Fig. 7 gezeigten Schlitze sind in diesem Ausführungsbeispiel als durchgehende Höhlen 129 ausgeführt, wobei die einzelnen Stellungen der Funktionsplatte in der Abfolge Fig. 12 bis 15 dargestellt sind. Ansonsten ist die gleiche Funktionalität gegeben.

### Figur 12 bis 15

Schnitte, welche die einzelnen Stellungen der Funktionsplatte in der Abfolge Fig. 12 bis 15 dargestellt sind.

### Figur 16. 17 und 18

Die dargestellte Gaskanalplatte 11 weist einen zur Gewährleistung eines genügenden Abflusses von eventuell kondensierten Lösungsmitteln bis zum geschlossenen Ende, vom offenen Ende her leicht ansteigenden zentralen Gaskanal auf, von dem aus sich Gaskanallöcher 114 zu der Funktionsplatte zugewandten Plattenoberfläche erstrecken. Die durchgehenden Löcher 113 sind in zwei parallelen Reihen entsprechend den durchgehenden Löchern 132 der Gegenplatte 13 und den durchgehenden Löchern der Stützplatte 14 und die Schraubenlöcher 141 entsprechend den Schraubenlöchern 131 bzw. dieser Platten angeordnet. Mit 161 sind Schraubenlöcher zur Befestigung der Stirnplatte bezeichnet. Am offenen Ende des Gaskanals 11 wird vorzugsweise ein Mehrfachventil angebracht, z.B. eingeschraubt, an das eine entsprechende Anzahl Vakuumpumpen und/oder Einrichtungen zur Zuführung von einem oder mehreren Gasen angeschlossen ist. In den Reaktionsgefässen 5 kann dann ein Unter- oder Überdruck erzeugt und/oder es können den Reaktionsgefässen 5 verschiedenste Gase zugeführt werden. Auf diese Weise können die mit den Funktionsplattenfunktionen erreichbaren Atmosphären bzw. Bedingungen in den Reaktionsgefässen 5 unter gleichzeitigem Schütteln vervielfacht werden.

### Figur 19

Der dargestellte Rückflusskühler 6 weist in seinem oberen Bereich eine Normschliffinnenfläche 62 zur lösbaren Befestigung des Rückflusskühlers 6 am Normschliff 63 einer Kupplung 4 oder einem Reaktionsgefäss 5 und in seinem unteren Bereich eine Normschliffaussenfläche 63 zur lösbaren Befestigung eines Reaktionsgefässes 5 auf. Er umfasst ausserdem ein Kühlrohr 61, das so weit in das Reaktionsgefäss 5 hineinreicht, dass im Reaktionsgefäss 5 unterhalb des Verbindungsbereichs 51 von Reaktionsgefäss 5 und Rückflusskühler 6 gekühlt werden kann. Damit wird erreicht, dass die Gasphase relativ weit unten im Reaktionsgefäss kondensiert, das Kondensat somit im Reaktionsgefäss 5 verbleibt und vor der Normschliffverbindung 62 kondensiert.

Das Kühlrohr 61 ist im Öffnungsquerschnitt des Reaktionsgefässes 5 asymmetrisch angeordnet, d.h. gegenüber der Rückflusskühlermitte nach aussen hin verschoben, um Platz für die Einführung eines Zuführ- und/oder Entnahmewerkzeugs oder die Zugabe z.B. eines Schutzgases, gasförmigen Reaktanden, gasförmigen Katalysators oder eines Feststoffes etc. in das Reaktionsgefäss 5 zu schaffen. Die Zu- und Wegführung des Kühlmediums, z.B. Wasser, erfolgt gemäss den Pfeilen B bzw. C mittels flexibler Zu- und Wegführleitungen, die derart angeordnet und z.B. mit den Zu- und Wegführleitungen der Rückflusskühler weiterer Reaktionsgefässe verbunden sind, dass ihr Platzbedarf minimiert wird.

### Figur 20

Bei der erfindungsgemässen Vorrichtung können prinzipiell viele verschiedene Arten von Reaktionsgefässen verwendet werden, die aber alle über eine Verbindungsmöglichkeit, wie z.B. Normschliff 62, zur lösbaren oder fixen Befestigung des Reaktionsgefässes, z.B. an einem Rückflusskühler 6 oder einer Kupplung 4, verfügen. Die Form und die aufnehmbaren Volumina der Reaktionsgefässe können abhängig vom verfügbaren Platz und der gewünschten Anzahl an nebeneinander eingesetzten Reaktionsgefässen in einem weiten Bereich variiert werden. So kommen z.B. zylinderförmige Reaktionsgefässe mit rundem oder flachem Boden, Rundkölbchen, Spitzkölbchen etc., insbesondere mit aufnehmbaren Volumina von 0,3 ml - 200 ml, in Betracht.

Hier dargestellt sind zwei mit einer flexiblen oder einer flexiblen oder eine steifen Leitung 52 verbundene Reaktionsgefässe 5" und5' ", die zur Filtration verwendet werden können. Das erste Ende des Rohres ragt in den oberen Bereich des Reaktionsgefässes 5" hinein, während das zweite Ende in eine Fritte 53, z.B. Glasfritte, im Bodenbereich des Reaktionsgefässes 5''' eingeschmolzen ist. Durch Druckerzeugung im Reaktionsgefäss 5''' gemäss Pfeil und/oder Vakuumerzeugung im Reaktionsgefäss5" gemäss Pfeil kann durch die Fritte 53 hindurch eine Filtration werden und dies unter gleichzeitigem und/oder vorgängigem Schütteln, und zwar so, dass sowohl der vor der Fritte 53 zurückbleibende Filterkuchen, als auch das Filtrat auf der gleichen Ebene dem Zugriff der Zugabevorrichtung zur Weiterverarbeitung zur Verfügung steht.

### Figuren 21 bis 25

Es können auch Reaktionsgefässe 5' verwendet werden, an die eine zusätzliche Kammer 8 mit einem Eingang und einem Ausgang 81, 81', 81" und 81"' angeschmolzen ist. Diese Kammern sind als Kühl- oder Heizkammern einsetzbar und vorzugsweise in platzsparender Weise miteinander verbunden. Auch die in Figur 12 beschriebenen Reaktionsgefässe 5 können mit zusätzlichen Kühl- oder Heizkammern versehen und/oder mit Rückflusskühlern 6 kombiniert werden. Grundsätzlich sind verschiedenartigste Kombinationen dieser Elemente mit allen möglichen Reaktionsgefässarten 5 denkbar.

### Figur 26

Ein alternatives Reaktionsgefäss 5" mit einer zweiten zusätzlichen Kammer 8 mit Anschlüssen für die Zu- und Wegführleitungen 81, 81' und daran angebrachten Leitungen 82, 82', 82'' für Medien, welche, zwecks Aufbau einer mechanischen Flexibilität zwischen den zwei auf engstem Raum nebeneinanderliegenden Reaktionsgefässen 5", um einen an den beiden Kammern 8 angebrachten Stab 84 bzw. 84' in Form von Spiralen gewickelt sind.

Auf dem linken Reaktionsgefäss ist ein Rückflusskühler 6 mit dem Rückflusskühlerrohr 61 über den Normschliff 63 am Reaktionsgefäss 5" angebracht, welcher seinerseits über den Normschliff 62 mit der flexiblen Kupplung 4 verbunden ist.

### Figuren 27a udn 27b

Ein Ausführungsbeispiel einer flexiblen Kammer 9 aus einem flexiblen, in einem grossen Temperaturbereich stabilen Material (Kunststoffe wie Silicon, rel. dünnwandiges Teflon, Polypropylen, etc.), in welche die Reaktionsgefässe 5 derart eintauchen, dass ein unterer Teil des Reaktionsgefässes 5 direkt mit dem Temperiermedium in Kontakt steht. Der Austritt von Temperiermedium aus der Kammer wird durch die hochgezogenen zylindrischen Wände 91 und die Dichtungsringe 92 erreicht. Die Zuführung des Wärmeträgers erfolgt über die Anschlüsse 93.

### Figur 28

Eine alternative Variante einer flexiblen Kammer 9 weist zu der in den Figuren 27a und 27b beschriebenen, den Unterschied auf, dass das Reaktionsgefäss nicht nur in die flexible Kammer eintritt, sondern durch diese hindurchstösst, so dass das Temperiermedium mit einem mittleren Bereich des Reaktionsgefässes 5 direkt in Kontakt steht. Folglich sind sowohl beim Eintrittspunkt als auch beim Austrittspunkt zylindrisch hochgezogene Wände 91 und Dichtungsringe 92 angebracht. Die Anschlüsse 93 für die Zuführleitungen sind stirnseitig angebracht.

### Figur 29

Das vorliegende Ausführungsbeispiel einer Vorrichtung weist fünf Schaltblöcke 1 auf, unter denen eine Schütteleinrichtung 7 angeordnet ist. Der Zugang zum Gaskanal 112 der jeweiligen Gaskanalplatte 11 wird durch Mehrfachventile 3 geregelt, über die entweder mittels einer Vakuumpumpe 23 ein Unterdruck erzeugt oder mittels einer Einrichtung zur Zuführung oder Entnahme von Gas zugeführt oder entnommen werden kann. Beim dargestellten Ausführungsbeispiel enthält die Gaszuführ- und - entnahmeeinrichtung einen Tank für einen gasförmigen Stoff, z.B. Argon, Wasserstoff etc. Zur Versorgung der Kühlrohre 61 der Rückflusskühler 6 und der aufgeschmolzenen, zweiten zusätzlichen Kammer 8 oder der flexiblen Kammer 9 der Reaktionsgefässe 5 mit einem Wärmeträger ist mindesten je ein Kryostate vorgesehen. Das Handling der Ausgangsstoffe oder Produkte erfolgt mittels einer Einrichtung zur Zuführung und Entnahme von Flüssigkeiten und/oder Feststoffen, die eine oder mehrere hohle Nadeln 261 oder andere Zuführ- und/oder Entnahmewerkzeuge umfasst. Die Ausgangsstoffe oder Produkte sind zum Teil in Gefässen 250 gelagert, die im Gefässgestell 25 angeordnet sind. Lösungsmittel- oder Lösungszapfstellen 28 ermöglichen eine Entnahme von Lösungsmitteln oder Lösungen aus Tanks. Eine Steuereinheit 88 , z.B. PC, dient zur Steuerung der Zuführung und Entnahme von Flüssigkeiten, Gasen und/oder. Feststoffen, d.h. der Einrichtung 261 zur Zuführung und Entnahme von Flüssigkeiten und/oder Feststoffen, der Einrichtung zur Zuführung und Entnahme von Gasen, der von Flüssigkeiten und/oder Feststoffen, der Einrichtung zur Zuführung und Entnahme von Gasen, der Vakuumpumpe 23, der Mehrfachventile 3 und der Funktionsplatten 9 bzw. deren Motoren 15, sowie der Schütteleinrichtung 7 und der Kryostaten 29, 89.

Zu der vorbeschriebenen Vorrichtung zur parallelen Durchführung einer Vielzahl von chemischen, biochemischen, biologischen oder physikalischen Verfahren sind weitere konstruktive Variationen realisierbar.

Hier ausdrücklich erwähnt sei noch, dass die Verbindungen zwischen den Kupplungen 4, Rückflusskühlern 6 und Reaktionsgefässen 5 nicht unbedingt über Normschliffe 63 erfolgen müssen, sondern beispielsweise auch Gewinde, Planschliffe etc. vorgesehen sein können. So muss auch die Verbindung 411 zwischen dem Block und der flexiblen Kupplung 4 nicht notwendigerweise geschraubt, sondern kann fix, ein Planschliff oder ein Bajonettverschluss sein.

## Patentansprüche

1. Reaktionsgefässhaltevorrichtung mit einem Fixteil (1;1') und einer Mehrzahl daran befestigter Kupplungen (4,4'), an die Reaktionsgefasse (55';5":5"') befestigbar sind, wobei zumindest ein Teil jeder Kupplung (4,4') flexibel ist, **dadurch gekennzeichnet, dass** mindestens eine der Kupplungen (4, 4') und der Fixteil (1;1') eine Öffnung (433,111,121) aufweisen, durch die ein Zufuhr- und/oder Entnahmewerkzeug in ein an der Kupplung (4,4') befestigtes Reaktionsgefäss (5;5';5";5"') einfuhrbar ist.

2. Reaktionsgefässhaltevorrichtung nach Anspruch 1, **dadurch gekennzeichnet, dass** das Zuführ- und/oder Entnahmewerkzeug eine Nadel (261), ein Löffel oder ein Greifer ist.

3. Reaktionsgefässhaltevorrichtung nach Anspruch 1 oder 2, **dadurch gekennzeichnet, dass** mindestens eine Kupplung (4,4') so ausgebildet ist, dass ein an der Kupplung (4,4') befestigtes Reaktionsgefäss (5;5';5";5"') schüttelbar ist, ohne dass der Fixteil (1;1') bewegt wird.

4. Reaktionsgefässhaltevorrichtung nach Anspruch 3, **dadurch gekennzeichnet, dass** jede der Kupplungen (4,4') so ausgebildet ist, dass jedes an einer der Kupplungen (4,4') befestigte Reaktionsgefäss (5;5';5";5"') schüttelbar ist, ohne dass der Fixteil (1;1') bewegt wird.

5. Reaktionsgefässhaltevorrichtung nach einem der Anspruche 1 bis 4, **dadurch gekennzeichnet, dass** mindestens eine Kupplung (4,4') so ausgebildet ist, dass das der Kupplung abgewandte Ende (59) eines an der Kupplung (4,4') befestigten Reaktionsgefasses (5) in drei Freiheitsgraden beweglich ist.

6. Reaktionsgefässhaltevorrichtung nach Anspruch 5, **dadurch gekennzeichnet, dass** mindestens eine Kupplung (4,4') so ausgebildet ist, dass das kupplungsseitige Ende (57) eines an der Kupplung (4,4') befestigten Reaktionsgefässes (5) in drei Freiheitsgraden beweglich ist.

7. Reaktionsgefässhaltevorrichtung nach einem der Ansprüche 1 bis 6, **dadurch gekennzeichnet, dass** mindestens eine Kupplung (4,4') so ausgebildet ist, dass sie eine vakuumfeste und druckdichte Verbindung von Reaktionsgefäss (5; 5'; 5"; 5"') und Fixteil (1; 1') gewährleistet.

8. Reaktionsgefässhaltevorrichtung nach einem der Ansprüche 1 bis 7, **dadurch gekennzeichnet, dass** mindestens eine Kupplung (4,4') einen reaktionsgefässseitigen starren Befestigungsteil (42;42') aufweist, der an einem flexiblen Teil, insbesondere einem Faltenbalg (43), einem flexiblen Rohr (43') oder einem Kugelgelenk, angebracht ist.

9. Reaktionsgefässhaltevorrichtung nach einem der Ansprüche 1 bis 8, **dadurch gekennzeichnet, dass** über dem oder im Fixteil (1), in mindestens einer Kupplung oder zwischen mindestens einer Kupplung und dem Fixteil ein Septum (73) angeordnet ist.

10. Reaktionsgefässhaltevorrichtung nach einem der Ansprüche 1 bis 9, **dadurch gekennzeichnet, dass** der Fixteil als Schaltblock (1) einer Vorrichtung zur parallelen Durchführung einer Vielzahl von chemischen, biochemischen, biologischen oder physikalischen Verfahren ausgebildet ist.

11. Reaktionsgefässhaltevorrichtung nach Anspruch 10, **dadurch gekennzeichnet, dass** die Vorrichtung zur parallelen Durchführung einer Vielzahl von chemischen, biochemischen, biologischen oder physikalischen Verfahren mindestens einen Schaltblock (1) aufweist, an dem eine Vielzahl von Reaktionsgefässen (5;5';5";5" ') abnehmbar oder fix befestigt sind, wobei den Reaktionsgefässen (5;5';5";5"') durch den Schaltblock (1) hindurch Flüssigkeiten, Gase und/oder Feststoffe zuführbar und/oder entnehmbar sind, wobei der Schaltblock (1) mindestens eine Gaskanalplatte (11) mit mindestens einem Gaskanal (112) und mindestens eine benachbarte Funktionsplatte (12) umfasst, wobei mindestens eine dieser Platten bezüglich der anderen verschiebbar angeordnet ist und die Gaskanalplatte (11) bzw. -platten und die Funktionsplatte (12) bzw. -platten durchgehende Löcher (111,121), durchgehende Schlitze, Vertiefungen (122) und/oder durchgehende Höhlen (129) aufweisen, die jeweils bei mindestens einer Plattenstellung einander so gegenüberliegen, dass
a) zumindest einem Reaktionsgefäss (5;5';5";5"') über den bzw. mindestens einen Gaskanal (112) Gase und/oder Flüssigkeiten zuführbar oder entnehmbar sind bzw.
b) zumindest einem Reaktionsgefäss (5;5';5";5"') sowohl durch die bzw. mindestens eine Gaskanalplatte (11) als auch durch die bzw. mindestens eine Funktionsplatte (12) hindurch Gase, Flüssigkeiten und/oder Feststoffe zuführbar oder entnehmbar sind.

12. Reaktionsblock, **dadurch gekennzeichnet, dass** er eine Reaktionsgefässhaltevorrichtung nach einem der Ansprüche 1 bis 11 mit einer Mehrzahl daran befestigter Reaktionsgefässe (5;5';5";5"') umfasst.

13. Reaktionsblock nach Anspruch 12, **dadurch gekennzeichnet, dass** zwischen der Reaktionsgefässhaltevorrichtung und mindestens einem Reaktionsgefäss (5;5") ein Rückflusskühler (6) angeordnet ist, der ein Kühlrohr (61) aufweist, das so weit in das- Reaktionsgefäss (5;5") hineinreicht, dass im Reaktionsgefäss (5;5") im Verbindungsbereich von Reaktionsgefäss (5;5") und Rückflusskühler (6) oder unterhalb davon gekühlt werden kann, wobei das Kühlrohr (61) insbesondere nur in der einen Hälfte des Öffnungsquerschnitts des Reaktionsgefässes (5;5") angeordnet sein kann.

14. Reaktionsblock nach Anspruch 12 oder 13, **dadurch gekennzeichnet, dass** mindestens zwei Reaktionsgefässe (5;5") untereinander und/oder mit einem Temperiergerät (29,89) und/oder einer anderen medienfördernden Einheit mittels einer medienführenden Leitung (82,82',82";82"') oder Kammer (9) flexibel direkt oder indirekt verbunden sind.

15. Reaktionsblock nach Anspruch 14, **dadurch gekennzeichnet, dass** die Flexibilität der medienführenden Leitung (82,82',82";82" ') durch eine spiralförmige Anordnung erreicht wird.

## Claims

1. Reaction vessel holding device, having a fixed part (1; 1') and a plurality of connectors (4, 4') which are connected to it and to which reaction vessels (5; 5'; 5"; 5"') can be fastened, at least one part of each connector (4, 4') being flexible, **characterized in that** at least one of the connectors (4, 4') and the fixed part (1; 1') have an opening (433, 111, 121) through which a supply and/or extraction tool can be introduced into a reaction vessel (5; 5'; 5"; 5"') fastened to the connector (4, 4').

2. Reaction vessel holding device according to Claim 1, **characterized in that** the supply and/or extraction tool is a needle (261), a spoon or a gripper.

3. Reaction vessel holding device according to Claim 1 or 2, **characterized in that** at least one connector (4, 4') is configured in such a way that a reaction vessel (5; 5'; 5"; 5"') fastened to the connector (4, 4') can be shaken without the fixed part (1; 1') being moved.

4. Reaction vessel holding device according to Claim 3, **characterized in that** each of the connectors (4, 4') is configured in such a way that each reaction vessel (5; 5'; 5"; 5"') fastened to one of the connectors (4, 4') can be shaken without the fixed part (1; 1') being moved.

5. Reaction vessel holding device according to one connector (4, 4') is configured in such a way that the end (59) facing away from the connector, of a reaction vessel (5) fastened to the connector (4, 4') can be moved in three degrees of freedom.

6. Reaction vessel holding device according to Claim 5, **characterized in that** at least one connector (4, 4') is configured in such a way that the end (57), on the connector side, of a reaction vessel (5) fastened to the connector (4, 4') can be moved in three degrees of freedom.

7. Reaction vessel holding device according to one of Claims 1 to 6, **characterized in that** at least one connector (4, 4') is configured in such a way that it ensures a vacuum-tight and pressure-tight connection between the reaction vessel (5; 5'; 5"; 5"') and the fixed part (1; 1').

8. Reaction vessel holding device according to one of Claims 1 to 7, **characterized in that** at least one connector (4, 4') has, at the reaction vessel end, a rigid fastening part (42; 42') which is attached to a flexible part, in particular a bellows (43), a flexible tube (43') or a spherical joint.

9. Reaction vessel holding device according to one of Claims 1 to 8, **characterized in that** a septum (73) is arranged over or in the fixed part (1), in at least one connector or between at least one connector and the fixed part.

10. Reaction vessel holding device according to one of Claims 1 to 9, **characterized in that** the fixed part is configured as a switching block (1) of a device for carrying out a multiplicity of chemical, biochemical, biological or physical processes in parallel.

11. Reaction vessel holding device according to Claim 10, **characterized in that** the device for carrying out a multiplicity of chemical, biochemical, biological or physical processes in parallel has at least one switching block (1) to which a multiplicity of reaction vessels (5; 5'; 5"; 5"') can be fastened in a removable or fixed manner, it being possible to supply and/or extract liquids, gases and/or solids to or from the reaction vessels (5; 5'; 5"; 5"') through the switching block (1), the switching block (1) comprising at least one gas duct plate (11) with at least one gas duct (112) and at least one adjacent functional plate (12), at least one of these plates being arranged so that it can be displaced relative to the other and the gas duct plate (11) or plates and the functional plate (12) or plates having through-holes (111, 121), through-slots, depressions (122) and/or through-cavities (129) which are located opposite one another, in each case in at least one plate position, in such a way that
a) gases and/or liquids can be supplied to or extracted from at least one reaction vessel (5; 5'; 5"; 5"') via the gas duct or via at least one gas duct (112), and
b) gases, liquids and/or solids can be supplied to or extracted from at least one reaction vessel (5; 5'; 5"; 5"') both through the gas duct plate (11) or through at least one gas duct plate and through the functional plate (12) or through at least one functional plate.

12. Reaction block, **characterized in that** it comprises a reaction vessel holding device according to one of Claims 1 to 11 with a plurality of reaction vessels (5; 5'; 5"; 5"') fastened to it.

13. Reaction block according to Claim 12, **characterized in that** a reflux cooler (6) is arranged between the reaction vessel holding device and at least one reaction vessel (5; 5"), which reflux cooler (6) has a cooling tube (61) which extends sufficiently far into the reaction vessel (5; 5") for cooling to take place in the reaction vessel (5; 5") in the connection region between the reaction vessel (5; 5") and the reflux cooler (6) or below this region, it being possible to arrange the cooling tube (61), in particular, in one half only of the opening cross section of the reaction vessel (5; 5").

14. Reaction block according to Claim 12 or 13, **characterized in that** at least two reaction vessels (5; 5") are flexibly connected directly or indirectly to one another and/or to a tempering unit (29, 89) and/or another medium-carrying unit by means of a medium-carrying line (82, 82', 82"; 82"') or chamber (9).

15. Reaction block according to Claim 14, **characterized in that** the flexibility of the medium-carrying line (82, 82', 82"; 82"') is achieved by a helical arrangement.

## Revendications

1. Dispositif de retenue de réacteurs avec une partie fixe (1; 1') et une pluralité d'accouplements qui y sont fixés (4, 4') auxquels on peut fixer des réacteurs (5; 5'; 5"; 5"'), une partie de chaque accouplement (4, 4') étant souple, **caractérisé en ce qu'**au moins l'un des accouplements (4, 4') et la partie fixe (1; 1') présentent une ouverture (433, 111, 121), à travers laquelle l'on peut introduire dans le réacteur (5; 5'; 5"; 5"') fixé à l'accouplement (4, 4') un outil d'apport et/ou de prélèvement.

2. Dispositif de retenue de réacteurs selon la revendication 1, **caractérisé en ce que** l'outil d'apport et/ou de prélèvement est une aiguille (261), une cuiller ou une griffe.

3. Dispositif de retenue de réacteurs selon la revendication 1 ou 2, **caractérisé en ce qu'**au moins un accouplement (4, 4') est construit de manière à ce qu'un réacteur (5; 5'; 5"; 5"'), fixé à l'accouplement (4, 4'), soit capable d'être secoué, sans que la partie fixe (1; 1') ne subisse un mouvement quelconque.

4. Dispositif de retenue de réacteurs selon la revendication 3, **caractérisé en ce que** chacun des accouplements (4, 4') est construit de telle sorte que chaque réacteur (5; 5'; 5"; 5"'), fixé à l'un des accouplements (4, 4'), puisse être secoué, sans que la partie fixe (1; 1') ne subisse un mouvement quelconque.

5. Dispositif de retenue de réacteurs selon l'une quelconque des revendications 1 à 4, **caractérisé en ce qu'**au moins un accouplement (4, 4') est construit de telle sorte que l'extrémité (59), opposée à l'accouplement (4, 4'), d'un réacteur (5), fixé à l'accouplement (4, 4'), soit mobile dans trois degrés de liberté.

6. Dispositif de retenue de réacteurs selon la revendication 5, **caractérisé en ce qu'**au moins un accouplement (4, 4') est construit de telle sorte que l'extrëmité (57), disposée du côté de l'accouplement (4, 4'), d'un réacteur (5), fixé à l'accouplement (4, 4'), soit mobile dans trois degrés de liberté.

7. Dispositif de retenue de réacteurs selon l'une quelconque des revendications 1 à 6, **caractérisé en ce qu'**au moins un accouplement (4, 4') est construit de telle sorte qu'il garantisse une liaison, résistante au vide et étanche à la pression, du réacteur (5; 5'; 5"; 5"') et de la partie fixe (1; 1').

8. Dispositif de retenue de réacteurs selon l'une quelconque des revendications 1 à 7, **caractérisé en ce qu'**au moins un accouplement (4, 4') présente une pièce de fixation (42; 42'), rigide du côté du réacteur, qui est fixée à une partie souple, en particulier à un soufflet (43), à un tube souple (43') ou à une articulation à rotule.

9. Dispositif de retenue de réacteurs selon l'une quelconque des revendications 1 à 8, **caractérisé en ce que** l'on dispose un septum (73) au dessus de la partie fixe (1) ou dans cette dernière, dans au moins un accouplement ou entre au moins un accouplement et la partie fixe.

10. Dispositif de retenue de réacteurs selon l'une quelconque des revendications 1 à 9, **caractérisé en ce que** la partie fixe est réalisée en tant que bloc de commutation (1) d'un dispositif destiné à l'exécution en parallèle d'une pluralité de procédés chimiques, biochimiques, biologiques ou physiques.

11. Dispositif de retenue de réacteurs selon la revendication 10, **caractérisé en ce que** le dispositif destiné à l'exécution en parallèle d'une pluralité de procédés chimiques, biochimiques, biologiques ou physiques présente au moins un bloc de commutation (1), auquel est fixée, de manière fixe ou amovible, une pluralité de réacteurs (5; 5'; 5"; 5"'), des liquides, des gaz et/ou des substances solides pouvant être amenés aux réacteurs (5; 5'; 5"; 5"') et/ou en être évacués à travers le bloc de commutation (1), le bloc de commutation (1) comprenant au moins une plaque d'arrivée de gaz (11) avec au moins une arrivée de gaz (112) et au moins une plaque de fonction voisine (12), au moins une de ces plaques étant disposée de manière mobile par rapport à l'autre plaque et la plaque d'arrivée de gaz (11), respectivement les plaques d'arrivée de gaz et la plaque de fonction (12), respectivement les plaques de fonction présentant des trous traversants (111, 121), des fentes traversantes, des enfoncements (122) et/ou des creux traversants (129), qui sont situés les uns en face des autres chaque fois de manière telle que, pour au moins une position des plaques,
a) l'on puisse amener à au moins un réacteur (5; 5'; 5"; 5"'), respectivement en évacuer, par l'intermédiaire de l'arrivée de gaz (112) ou d'au moins une arrivée de gaz, des gaz et/ou des liquides, respectivement
b) l'on puisse amener à au moins un réacteur (5; 5'; 5"; 5"'), respectivement en évacuer, à travers non seulement la plaque d'arrivée de gaz, respectivement au moins une plaque d'arrivée de gaz (11), mais aussi a travers la plaque de fonction, respectivement au moins une plaque de fonction (12), des gaz, des liquides et/ou des substances solides.

12. Bloc de réaction, **caractérisé en ce qu'**il comprend un dispositif de retenue de réacteurs selon l'une des revendications 1 à 11, avec une pluralité de réacteurs (5; 5'; 5"; 5"') qui y sont fixées.

13. Bloc de réaction selon la revendication 12, **caractérisé en ce que** l'on dispose, entre le dispositif de retenue de réacteurs et au moins un réacteur (5; 5"), un condenseur à reflux (6), qui présente un tube de refroidissement (61), qui pénètre dans le réacteur (5; 5") dans une mesure telle que l'on puisse procéder à un refroidissement dans le réacteur (5; 5") dans la zone de jonction du réacteur (5; 5") et du condenseur à reflux (6) ou en dessous, le tube de refroidissement (61) pouvant n'être disposé en particulier que dans une moitié de la section transversale d'ouverture du réacteur (5; 5").

14. Bloc de réaction selon la revendication 12 ou 13, **caractérisé en ce qu'**au moins deux réacteurs (5; 5") sont reliés, directement ou indirectement, d'une manière souple, l'un à l'autre et/ou à un appareil d'équilibrage de la température (29, 89) et/ou à une autre unité de transport de milieux, à l'aide d'un conduit acheminant des milieux (82, 82', 82"; 82"') ou à l'aide d'une chambre (9).

15. Bloc de réaction selon la revendication 14, **caractérisé en ce que** la souplesse du conduit acheminant des milieux (82, 82', 82"; 82"') est obtenue par un agencement en spirale.
